# EUROPÄISCHE PATENTSCHRIFT

(11) **EP 2 894 312 B1**
(45) Veröffentlichungstag und Bekanntmachung des Hinweises auf die Patenterteilung: **06.03.2019**
(21) Anmeldenummer: 15150794.4
(22) Anmeldetag: 12.01.2015
(51) Int. Cl.: F01N 13/14, F01N 13/18, F16L 59/21, F16L 25/00, F16L 51/02

(54) **Flexibles Leitungselement mit Isolierung**
Flexible pipe component with insulation
Élément de conduite flexible avec isolation

(30) Priorität: 13.01.2014 DE 102014100296
(43) Veröffentlichungstag der Anmeldung: 15.07.2015
(73) Patentinhaber: Witzenmann GmbH, 75175 Pforzheim (DE)
(72) Erfinder: Drouart, Nicolas, 75331 Grunbach (DE); Kunzmann, Samuel, 75177 Pforzheim (DE)
(74) Vertreter: Lemcke, Brommer & Partner Patentanwälte Partnerschaft mbB

(56) Entgegenhaltungen:
- EP-A1- 1 726 864
- WO-A1-02/18755
- WO-A2-2009/140397
- DE-U1- 7 727 935
- DE-U1- 8 533 984
- DE-U1-202008 013 021
- DE-U1-202012 008 100
- US-A- 3 146 005

## Beschreibung

Die Erfindung betrifft ein flexibles Leitungselement nach dem Oberbegriff des Anspruchs 1 oder nach dem Oberbegriff des Anspruchs 13 mit einem Balg oder Wellschlauch, der wenigstens einen gewellten Abschnitt und einen sich daran anschließenden endständigen Anschlussabschnitt aufweist.

Außerdem betrifft die Erfindung ein isoliertes Leitungselement mit einem erfindungsgemäßen flexiblen Leitungselement, wobei die thermisch isolierende Außenkomponente das flexible Leitungselement umgibt.

Dem Fachmann sind vielerlei Arten von flexiblen Leitungselementen bekannt, bei denen die erforderliche Flexibilität durch Verwendung eines metallischen Balgs oder Wellschlauchs erreicht wird. Derartige flexible Leitungselemente kommen beispielsweise als Entkoppelelemente in Abgasanlagen von Kraftfahrzeugen mit Verbrennungsmotor zum Einsatz. Eine andere mögliche Verwendung ergibt sich beispielsweise im Bereich von Ladeluftleitungen für Verbrennungskraftmaschinen, insbesondere im Fahrzeugbereich. In diesem Zusammenhang ist das flexible Leitungselement oftmals nicht durchgängig gewellt ausgebildet, sondern weist nur relativ kurze, endständige Wellenpakete auf. Aus diesem Grund bezieht sich die Erfindung allgemein auf Bälge oder Wellschläuche, die wenigstens einen gewellten Abschnitt aufweisen. An diesen gewellten Abschnitt schließt sich endständig in der Regel ein so genannter Anschlussabschnitt auf, der insbesondere glattzylindrisch ausgebildet sein kann. In diesem Bereich erfolgt die Anbindung des flexiblen Leitungselements an weitere Bestandteile einer Leitungsanordnung, beispielsweise einer Kfz-Abgasleitung.

Um Wärmeverluste eines in dem genannten flexiblen Leitungselement geführten Fluids nach Möglichkeit zu vermeiden, was heutzutage insbesondere im Hinblick auf die immer strenger werdenden Abgasnormen bzw. auf die erforderliche Nachbehandlung des Abgases von immer größerer Bedeutung ist, werden flexible Leitungselemente der oben genannten Art regelmäßig mit einer insbesondere thermisch wirksamen Isolierung versehen, die außen an dem flexiblen Leitungselement angeordnet ist. Weil es aufgrund der inhärenten Flexibilität des Leitungselements zur einer Relativbewegung zwischen diesem und der Isolierung kommt, muss das System, damit es angemessene Standzeiten erreicht, eine Lücke in Form eines radialen Abstands zwischen den Wellen in dem gewellten Bereich und der Isolierung aufweisen. Dies wird erreicht durch Verwendung einer Unterkonstruktion, an der die Isolierung mit Abstand zum flexiblen Leitungselement befestigt wird.

Nach dem vorbekannten Stand der Technik, wie auch durch die Anmelderin angeboten wird, sind die genannte Unterkonstruktion und der Balg oder Wellschlauch durch Verschweißen miteinander verbunden. Bei bestimmten Anschlussgeometrien ist jedoch noch eine solche Verschweißung aus Platzgründen nur schwer oder gar nicht realisierbar. Außerdem besteht beim Verschweißen das Risiko, den aus relativ dünnwandigem Material gefertigten Balg oder Wellschlauch zu zerstören. Eine möglicherweise geeignetere Punktschweißung wäre auf Dauer für die Befestigung der Unterkonstruktion nicht stabil genug.

Sofern Balg oder Wellschlauch und Unterkonstruktion mittels Laserverschweißung verbunden sind, kann außerdem das Problem bestehen, dass anschließend keine weitere Schweißanbindung mehr vorgenommen werden kann, da sonst die Gefahr bestünde, die bereits ausgebildete Laserschweißnaht zu beschädigen. Dies könnte unter Umständen zu einer Beeinträchtigung der Dichtheit des Leitungselements führen.

Des Weiteren sind die bislang eingesetzten Unterkonstruktionen in der Herstellung relativ aufwändig und kostenträchtig.

Aus der WO 02/18755 A1 ist eine Abgasentkopplungsleitung bekannt, die einen Balg und einen Halter aufweist. Der Halter ist zu einer Anordnung eines ringförmigen Dämpfungselements ausgebildet.

Die DE 20 2008 013 021 U1 offenbart eine Isoliervorrichtung eines Kompensators einer Rohrleitung, wobei die Isoliervorrichtung Isoliermaterial enthält und den Kompensator umgibt.

Die EP 1 726 864 A1 offenbart einen Kompensator zur Verwendung in Gasturbinenmotoren.

In der WO 2009/140397 A2 ist ein abgedichtetes Kopplungselement gezeigt, das zu einer Verbindung von zwei Rohrenden vorgesehen und ausgebildet ist.

Aus der G 85 33 984.9 U1 ist eine Vorrichtung zum Verbinden eines Rohres mit einem Leitungsteil bekannt.

Die US 3,146,005 zeigt eine isolierte Leitung mit einer röhrenförmigen Innenkomponente, die zu einer Durchströmung durch ein Fluid ausgebildet ist.

Es besteht Bedarf an einem flexiblen Leitungselement der weiter oben genannten Art, welches die beabstandete Befestigung einer isolierenden Außenkomponente ermöglicht, ohne dass die Lebensdauer des Balgs oder Wellschlauchs einerseits bzw. der Außenkomponente andererseits beeinträchtigt würde. Außerdem soll sich das zu schaffende flexible Leitungselement durch eine einfache und kostengünstige Herstellbarkeit auszeichnen.

Diese Aufgabe wird erfindungsgemäß gelöst durch ein flexibles Leitungselement mit den Merkmalen des Anspruchs 1 und durch ein flexibles Leitungselement mit den Merkmalen des Anspruchs 13.

Vorteilhafte Weiterbildungen der Erfindung sind Gegenstand von Unteransprüchen.

Erfindungsgemäß ist ein flexibles Leitungselement mit einem Balg oder Wellschlauch, der wenigstens einen gewellten Abschnitt und einen sich daran anschließenden endständigen Anschlussabschnitt aufweist, dadurch gekennzeichnet, dass auf wenigstens einer Seite des Balgs in dem Anschlussabschnitt ein eigenstabiler Distanzhalter mit dem Balg oder Wellschlauch verbunden ist, welcher Distanzhalter den gewellten Abschnitt zumindest teilweise übergreift und von diesem radial beabstandet ist, wobei an dem Distanzhalter ein thermisches Isoliermaterial zur äußeren thermischen Isolierung des flexiblen Leitungselements angeordnet ist.

Nach einem anderen Aspekt der Erfindung ist ein flexibles Leitungselement mit einem Balg oder Wellschlauch, der wenigstens einen gewellten Abschnitt und einen sich daran anschließenden endständigen Anschlussabschnitt aufweist, dadurch gekennzeichnet, dass auf wenigstens einer Seite des Balgs in dem Anschlussbereich eine, bezogen auf den Anschlussabschnitt, relativ massivere Rohrleitungskomponente mit dem Balg oder Wellschlauch verbunden ist, vorzugsweise stoffschlüssig und/oder kraftschlüssig, welche Rohrleitungskomponente einen radialen Vorsprung aufweist, vorzugsweise umlaufend, welcher radiale Vorsprung ein Übermaß oder wenigstens ein Gleichmaß in radialer Richtung bezogen auf den gewellten Abschnitt des Balgs oder Wellschlauchs aufweist, wobei außen auf dem radialen Vorsprung im axialen Schiebesitz ein im Längsschnitt etwa U-förmiges Ringteil angeordnet ist, wobei an dem Ringteil eine Außenkomponente aus einem thermischen Isoliermaterial zur äußeren thermischen Isolierung des flexiblen Leitungselements angeordnet ist, wobei vorzugsweise der radiale Vorsprung an seiner Außenumfangsfläche gewölbt ausgebildet ist, höchst vorzugsweise konvex gewölbt.

Nach dem zuerst genannten Aspekt der vorliegenden Erfindung übergreift der eigenstabile Distanzhalter, der in dem Anschlussabschnitt mit dem Balg oder Wellschlauch verbunden ist, den gewellten Abschnitt des Balgs oder des Wellschlauchs zumindest teilweise und ist von diesem radial beabstandet. Das an dem Distanzhalter zur äußeren thermischen Isolierung des flexiblen Leitungselements angeordnete spezielle thermische Isoliermaterial kommt aufgrund des radialen Übermaßes des Distanzhalters gegenüber dem gewellten Bereich nicht mit dem Balg oder Ringwellschlauch in Kontakt, was die Standzeit der Anordnung verlängert.

Gemäß dem zweiten Aspekt der vorliegenden Erfindung ist das thermische Isoliermaterial an dem U-förmigen Ringteil angeordnet, welches sich im axialen Schiebesitz auf dem radialen Vorsprung der relativ massiveren Rohrleitungskomponente befindet, welche in dem Anschlussbereich mit dem Balg oder Ringwellschlauch verbunden ist. Da der radiale Vorsprung
ein Übermaß oder wenigstens ein Gleichmaß in radialer Richtung bezüglich des gewellten Abschnitt des Balgs oder Wellschlauchs aufweist, resultiert auch auf diese Weise der geforderte radiale Abstand zwischen Balg oder Wellschlauch einerseits und Isolierung andererseits.

In beiden Fällen wird die gewünschte Beweglichkeit des flexiblen Leitungselements, welche durch die inhärenten Eigenschaften des Balg- oder Wellschlauchs bestimmt ist, nicht wesentlich beeinträchtigt, so dass die gewünschte Entkopplungs- oder Kompensationswirkung erhalten bleibt.

Im Zuge einer ersten Weiterbildung des ersten Aspekts der vorliegenden Erfindung kann der Distanzhalter nach Art einer Glocke ausgebildet sein und kann dabei weiterhin aus mehreren sich in Umfangsrichtung ergänzenden Schalen bestehen, vorzugsweise aus zwei Halbschalen. Eine derartige Glocke weist mindestens einen ersten Abschnitt mit relativ geringerem Durchmesser und wenigstens einen zweiten Abschnitt mit relativ größerem Durchmesser auf, wobei zwischen dem ersten Abschnitt und dem zweiten Abschnitt regelmäßig ein Übergangsbereich angeordnet ist, in dem sich der Durchmesser entsprechend verändert. Der Distanzhalter übergreift mit dem zweiten Abschnitt den gewellten Abschnitt des Balgs oder Wellschlauchs und ist im Bereich des ersten Abschnitts mit dem Balg oder Wellschlauch verbunden. Auf diese Weise kann der Distanzhalter als Träger bzw. Unterkonstruktion für die Außenkomponente fungieren und zugleich den Endbereich des Balgs oder Wellschlauchs gegenüber äußeren Schadeinwirkungen schützen.

Eine andere Weiterbildung des ersten Aspekts der vorliegenden Erfindung sieht vor, dass der Distanzhalter nach Art wenigstens einer zusätzlichen Balg- oder Schlauchlage in dem Anschlussbereich ausgebildet ist. Es ist in diesem Zusammenhang möglich, im Rahmen an einer ansonsten herkömmlichen Balgherstellung ein zusätzliches zylinderförmiges Leitungselement bzw. eine Balglage als so genannte Glocke aufzuweiten und auf dem ansonsten in herkömmlicher Weise gefertigten Balg zu montieren, so dass die genannte Glocke mit ihrem zweiten Abschnitt den gewellten Bereich des Balgs oder Wellschlauchs zumindest teilweise übergreift. Der eigentliche Anschlussabschnitt des Balgs verhält sich dann wie ein Standard-Balg mit einer (oder gegebenenfalls mehreren) zusätzlichen Lage(n). Die eigentliche Fixierung der Glocke erfolgt dadurch, dass der Balg und die Zusatzlage(n) in dem Anschlussabschnitt gemeinsam umgeformt und/oder stoffschlüssig miteinander verbunden werden, insbesondere unter Ausbildung eines V-Bords oder eines endständigen Bördels.

Eine besonders bevorzugte Weiterbildung des ersten Aspekts der vorliegenden Erfindung sieht vor, dass der Balg oder Wellschlauch im Anschlussabschnitt einen - weiter oben bereits erwähnten - V-Bord ausbildet, und dass der Distanzhalter in dem ersten Abschnitt zumindest abschnittweise parallel zu dem Balg oder Wellschlauch verläuft. Dies kann beispielsweise dadurch erreicht werden, dass der Balg und der Distanzhalter, der nach Art einer zusätzlichen Balglage ausgebildet sein kann, im genannten Bereich gemeinsam umgeformt werden, worauf weiter oben bereits hingewiesen wurde.

Im Zuge einer wieder anderen Weiterbildung des ersten Aspekts der vorliegenden Erfindung können der Balg oder Wellschlauch und der Distanzhalter in dem Anschlussabschnitt gemeinsam um einen Winkel, vorzugsweise 90°, radial nach außen umbördelt sein. In diesem Zusammenhang kann auch ein radial außen angeordnetes, relativ zu dem Balg oder Wellschlauch und/oder zu dem Distanzhalter massiveres Gegenstück Verwendung finden, um welches herum das flexible Leitungselement in dem Anschlussabschnitt gebördelt wird.

Eine andere, ebenfalls besonders bevorzugte Weiterbildung des ersten Aspekts der vorliegenden Erfindung sieht vor, dass zum Verbinden von Balg oder Wellschlauch und Distanzhalter keinerlei Schweißverbindung erfolgt, welche einerseits das flexible Leitungselement beschädigen könnte und oftmals aufgrund von Platzproblemen nur schwer bzw. nur sehr aufwändig ausführbar ist. Es wird in diesem Zusammenhang auf ein Klemmprinzip zurückgegriffen, wonach Balg oder Wellschlauch und Distanzhalter kraftschlüssig miteinander verbunden oder verbindbar sind, vorzugsweise unter Verwendung einer V-Bordschelle und eines geeignet geformten Gegenstücks, so dass auf eine Schweißverbindung vollständig verzichtet werden kann.

Es ist jedoch im Zuge einer anderen Weiterbildung des ersten Aspekts der vorliegenden Erfindung alternativ vorgesehen, den Balg oder Wellschlauch und den Distanzhalter zusätzlich auch stoffschlüssig zu verbinden, vorzugsweise durch Kleben oder Verschweißen, höchst vorzugsweise durch Punktverschweißung. Insbesondere letztere kann auch eingesetzt werden, um Balg oder Wellschlauch und Distanzhalter im Zuge der Montage vorläufig miteinander zu verbinden, bis die eigentliche, kraftschlüssige Verbindung hergestellt wurde.

Im Zuge einer wieder anderen Weiterbildung des ersten Aspekts der vorliegenden Erfindung kann vorgesehen sein, dass die stoffschlüssige Verbindung in dem Anschlussabschnitt nach Art einer umlaufenden Rollschweißnaht ausgebildet ist.

Eine wieder andere Weiterbildung des ersten Aspekts der vorliegenden Erfindung sieht vor, dass der Balg oder Wellschlauch und der Distanzhalter in dem Anschlussabschnitt stoffschlüssig verbunden sind, was vorzugsweise in einem endständigen Bereich der Anordnung geschieht. Vorzugsweise kann in diesem Zusammenhang mindestens eine radial innen und/oder eine radial außen liegende Hülse und/oder ein relativ massiveres Gegenstück eingesetzt werden, um die Verbindungssicherheit zu gewährleisten.

Aufbauend auf dem erfindungsgemäßen flexiblen Leitungselement betrifft die Erfindung auch ein isoliertes Leitungselement mit einer an dem Distanzhalter angeordneten (thermisch) isolierenden Außenkomponente, die ein flexibles Leitungselement, vorzugsweise den Balg oder Wellschlauch, im Wesentlichen umgibt.

Die Außenkomponente kann an ihrem einen Ende an dem Distanzhalter fixiert sein, während sie an ihrem anderen Ende zumindest in Axialrichtung im Wesentlichen frei beweglich bezüglich des flexiblen Leitungselements ist. Vorzugsweise ergibt sich eine solche Beweglichkeit dadurch, dass die Außenkomponente an dem genannten anderen Ende in einem Schiebesitz bezüglich des flexiblen Leitungselements befindlich angeordnet ist.

Erfindungsgemäß handelt es sich bei der Außenkomponente um eine thermisch wirksame Isolierung, die vorteilhafterweise eigenstabil ist und vorzugsweise in Form mehrerer Schalen, höchst vorzugsweise in Form von zwei Halbschalen aufgebaut ist.

Im Zuge einer besonders bevorzugten Weiterbildung des zweiten Aspekts der vorliegenden Erfindung dient das weiter oben angesprochene Ringteil direkt oder indirekt als Träger für eine insbesondere thermisch isolierende Außenkomponente, welche wiederum vorzugsweise eigenstabil ausgebildet und höchst vorzugsweise radial außen liegend bezüglich des Ringteils angeordnet und an diesem fixiert ist.

Eine besonders bevorzugte Weiterbildung der Erfindung, welche den ersten Aspekt und den zweiten Aspekt vereint, sieht vor, dass ein flexibles Leitungselement an seinem einen Ende gemäß dem ersten Aspekt der vorliegenden Erfindung und an seinem anderen Ende gemäß dem zweiten Aspekt der vorliegenden Erfindung ausgebildet ist.

Um im Hinblick auf den zweiten Aspekt der vorliegenden Erfindung auch eine gewisse angulare Beweglichkeit der Anordnung zu gewährleisten, sieht eine andere Weiterbildung vor, dass der radiale Vorsprung an seiner Außenumfangsfläche gewölbt ausgebildet ist.

Basierend auf den weiter oben beschriebenen kombinierten flexiblen Leitungselement gemäß dem ersten und dem zweiten Aspekt der vorliegenden Erfindung schafft diese auch ein isoliertes Leitungselement mit einem entsprechend kombinierten flexiblen Leitungselement, das zusätzlich die thermisch isolierende Außenkomponente aufweist, die das flexible Leitungselement, vorzugsweise den Balg oder Wellschlauch im Wesentlichen umgibt.

Die Außenkomponente ist dann an einem Ende der Anordnung an dem Distanzhalter fixiert, während sie am anderen Ende der Anordnung an dem Ringteil fixiert sein kann.

Weitere Eigenschaften und Vorteile der Erfindung ergeben sich anhand der Zeichnungen:
- Figur 1: zeigt schematisch und im Längsschnitt eine mögliche Ausgestaltung gemäß dem ersten Aspekt der vorliegenden Erfindung;
- Figuren 2 bis 7: zeigen aufeinanderfolgende Schritte bei der Herstellung eines erfindungsgemäßen Leitungselements gemäß dem ersten Aspekt der vorliegenden Erfindung;
- Figur 8: zeigt eine Detaildarstellung einer Ausgestaltung gemäß dem zweiten Aspekt der vorliegenden Erfindung;
- Figur 9: zeigt eine Variante der Ausgestaltung gemäß Figur 8.

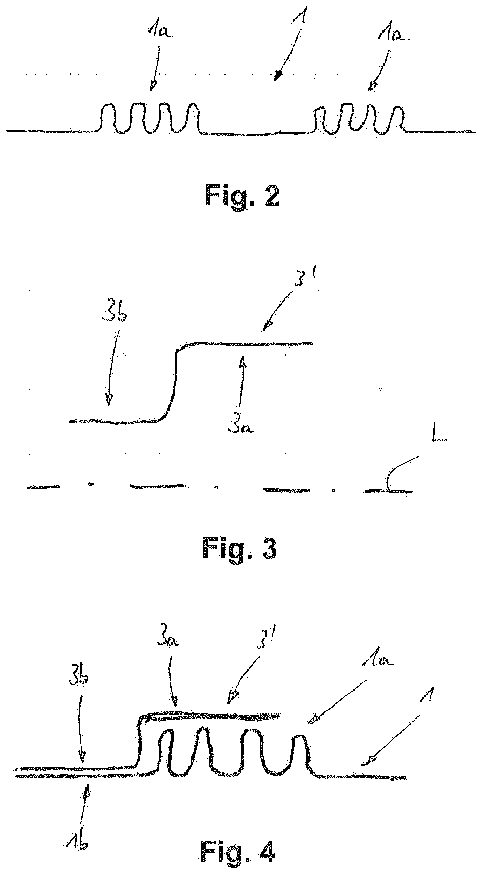

In allen Figuren bezeichnen gleiche Bezugszeichen gleiche oder gleichwirkende Elemente. Bei allen Darstellungen handelt es sich um (teilweise) Längsschnitte durch ein erfindungsgemäßes (flexibles) Leitungselement, wobei die Längsachse der Anordnung nur in Figur 3 bei Bezugszeichen L exemplarisch dargestellt ist.

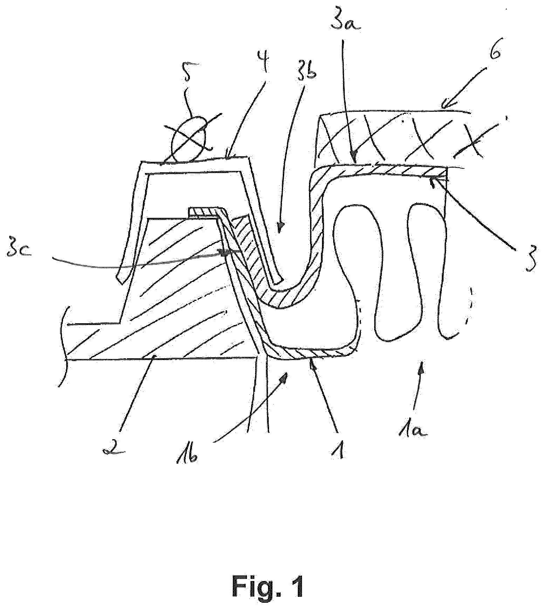

Figur 1 zeigt eine mögliche Ausgestaltung des ersten Aspekts der vorliegenden Erfindung in einem teilweisen Längsschnitt. Bezugszeichen 1 bezeichnet einen Metallbalg, der bei Bezugszeichen 1a einen gewellten Abschnitt und bei Bezugszeichen 1b einen endständigen Anschlussabschnitt aufweist, in dem ein so genannter V-Bord ausgebildet ist. Dazu erfährt der Balg 1 ausgehend von einem achsparallelen Verlauf eine stetige Zunahme seines Durchmessers zu seinem Ende hin, woran sich ein letzter, endständiger Abschnitt mit wiederum achsparallelem Verlauf anschließt. Bei Bezugszeichen 2 ist ein relativ zu dem Balg 1 massiveres Gegenstück dargestellt, welches eine zu dem V-Bord des Balgs 1 komplementäre Geometrie aufweist, so dass der Balg 1 mit seinem V-Bord flächig an dem Gegenstück 2 anliegt. Bezugszeichen 3 bezeichnet einen eigenstabilen Distanzhalter, welcher Distanzhalter 3 einen Abschnitt 3a mit einem relativ großen Durchmesser aufweist, wobei er in diesem Bereich 3a den gewellten Bereich 1a des Balgs 1 übergreift, wie dargestellt. Außerdem weist der Distanzhalter 3 noch einen anderen Abschnitt mit relativ geringerem Durchmesser auf, der in Figur 1 mit dem Bezugszeichen 3b bezeichnet ist. In diesem Bereich 3b ist der Distanzhalter 3 kraftschlüssig mit dem Balg 1 verbunden. Zu diesem Zweck ist das freie Ende des Distanzhalters 3 so geformt, dass es abschnittweise parallel zum V-Bord des Balgs 1 verläuft. Dies ist in Figur 1 bei Bezugszeichen 3c dargestellt. Insbesondere in diesem Bereich werden der V-Bord des Balgs 1 und der Distanzhalter 3 von einer V-Bordschelle 4 mit Schraube 5 umgriffen, welche Distanzhalter 2 und Balg 1 gemeinsam gegen das Gegenstück 2 zwängt, wenn die Schraube 5 entsprechend angezogen wird. Es kommt so zu einer Klemmverbindung zwischen Distanzhalter 3 und Balg 1, ohne dass ein Verschweißen der genannten Bauteile erforderlich wäre.

Auf diese Weise kann selbst bei engem Bauraum trotzdem eine Unterkonstruktion (Distanzhalter 3) angebracht werden, ohne den Balg 1 zu beschädigen. Die Haltekraft für den Distanzhalter 3, der in Umfangsrichtung aus mehreren Teilschalen, vorzugsweise zwei Halbschalen, gebildet sein kann, wird durch die Presskraft der V-Bordschelle 4 aufgebracht. Da hierbei ausschließlich im Außenbalgbereich gearbeitet wird, besteht kein Risiko für die Dichtheit der V-Bord-Trennstelle.

Möglich wäre in Weiterbildung dieser grundsätzlichen Idee jedoch auch eine Ausgestaltung, bei der der oder die Distanzhalter 3 zusätzlich stoffschlüssig am Balgbord fixiert wird bzw. werden, was beispielsweise durch Kleben oder Punktschweißung erreicht werden kann. Ziel dabei wäre jedoch in erster Linie nicht die dauerhaft sichere Verbindung von Distanzhalter 3 und Balg 1, sondern lediglich eine transportsichere Positionierung, bis die endgültige Fixierung mittels der Schelle 4 erfolgt.

Weiterhin dargestellt ist in Figur 1 bei Bezugszeichen 6 noch eine Außenkomponente in Form einer eigenstabilen thermischen Isolierung, die in dem Bereich 3a außen an dem Distanzhalter 3 fixiert ist und den Balg 1 in seinem weiteren Verlauf nach rechts umgibt, um eine thermische Isolation des Balgs 1 bzw. des daran geführten Fluids, beispielsweise eines heißen Abgasstroms, zu gewährleisten.

Wie der Figur 1 noch entnommen werden kann, besteht zwischen dem Distanzhalter 3 und dem gewellten Bereich 1a des Balgs 1 in radialer Richtung ein deutlicher Abstand, so dass auch die Außenkomponente 6 einen entsprechenden Abstand zum Balg 1 bzw. dem gewellten Bereich 1a einhält. Dadurch kommt es zu keiner Berührung zwischen Außenkomponente 6 und Balg 1, was die Lebensdauer der Anordnung deutlich erhöht.

Die Figuren 2 bis 4 zeigen einen möglichen Ablauf bei der Herstellung eines erfindungsgemäßen flexiblen Leitungselements, welches Herstellungsverfahren insbesondere zu dem vorstehend anhand von Figur 1 detailliert beschriebenen flexiblen Leitungselement mit Außenisolierung führen kann.

Figur 2 zeigt schematisch und teilweise im Längsschnitt einen in herkömmlicher Weise hergestellten Balg 1. Dieser kann einen durchgängig gewellten Abschnitt aufweisen oder - wie in Figur 2 dargestellt - zwei getrennte gewellte Bereiche 1a. Diese gewellten Bereiche 1a können hinsichtlich der Längserstreckung des Balgs 1 im Wesentlichen endständig angeordnet sein, wie dies beispielsweise bei den weiter oben bereits erwähnten Ladeluftleitungen der Fall ist.

In Figur 3 ist dargestellt, wie ein zusätzliches zylindrisches Leitungselement bzw. eine Balglage abschnittweise radial zu einer "Glocke" aufgeweitet wird, die in Figur 3 in Anlehnung an die Bezeichnung des Distanzhalters in Figur 1 mit dem Bezugszeichen 3' bezeichnet ist. Die ebenfalls als Distanzhalter fungierende Glocke 3' weist weiter den oben anhand von Figur 1 bereits angesprochenen Bereich 3a mit größerem Durchmesser und den Bereich 3b mit kleinerem Durchmesser auf.

In Figur 4 ist schematisch dargestellt, wie die Glocke 3' auf den Balg 1 montiert bzw. angeordnet wird, so dass sie mit ihrem abmessungstechnisch weiteren Abschnitt 3a den gewellten Abschnitt 1a des Balgs 1 im Wesentlichen abdeckt. Im Anschlussabschnitt 1b des Balgs 1 verläuft die Glocke 3' mit ihrem Abschnitt 3b kleineren Durchmessers im Wesentlichen parallel zum Balg 1, so dass dort ein Anschlussbereich oder Bord wie bei einem "normalen" Balg mit einer weiteren Lage ausgebildet ist.

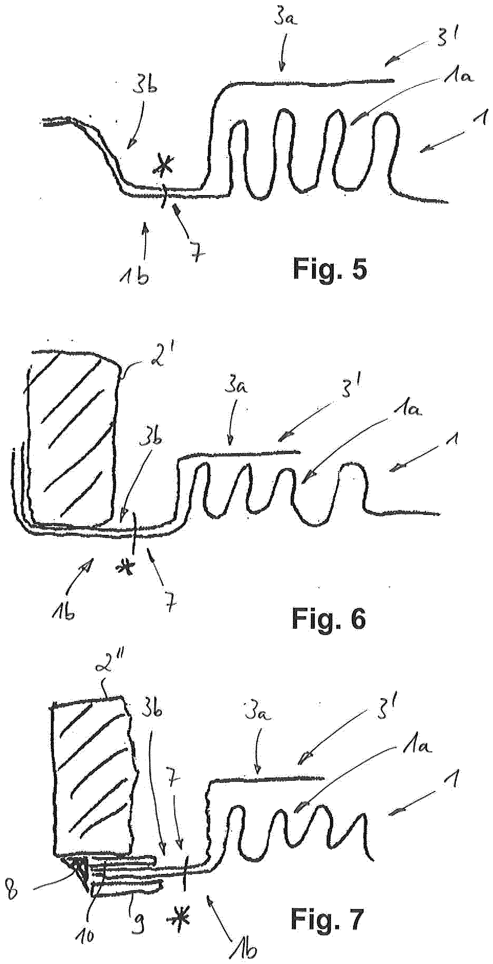

Figuren 5 bis 7 zeigen nun mehrere, alternative Anschlussarten, wie die Glocke 3' bzw. der Distanzhalter am Balg 1 fixiert werden kann.

Gemäß Figur 5 wird im Bereich 3b des Balgs 1 der bereits weiter oben anhand von Figur 1 beschriebene V-Bord ausgebildet. Anschließend können Glocke 3' und Balg 1 gemäß Figur 1 klemmend verbunden werden, wie weiter oben bereits ausführlich beschrieben. Weiterhin kann bei Bezugszeichen 7 zur Fixierung zusätzlich auch eine Rollschweißnaht oder dergleichen zum stoffschlüssigen Verbinden der Balglagen angebracht werden. Dieses Merkmal findet sich auch in den weiteren Figuren 6 und 7.

In Figur 6 ist eine Alternative gezeigt, bei der Glocke 3' und Balg 1 im Bereich 3b bzw. 1b gemeinsam umgebördelt werden, und zwar um etwa 90° nach außen um ein entsprechendes Gegenstück 2'.

In Figur 7 ist eine Ausgestaltung dargestellt, bei der Balg 1 und Glocke 3' im Bereich 1b bzw. 3b stoffschlüssig miteinander und mit einem geeigneten Gegenstück 2" verbunden sind. Eine entsprechende Schweißnaht ist mit Bezugszeichen 8 bezeichnet. Dabei kommen im Schweißnahtbereich noch eine innere Hülse 9 und eine äußere Hülse 10 zum Einsatz, wie dargestellt, um eine ausreichende Verbindungssicherheit zu gewährleisten.

Die Rollnahtverschweißung bei Bezugszeichen 7 ist - wie ausgeführt - jeweils optional.

In Abschnitt 3a der Glocke 3' kann anschließend, wie in Bezug auf Figur 1 beschrieben, noch eine Außenkomponente befestigt werden, die zur Isolierung des Balgs 1 dient. Dies ist in den Figuren 2 bis 7 nicht explizit dargestellt. Auf die entsprechende Beschreibung der Figur 1 kann verwiesen werden.

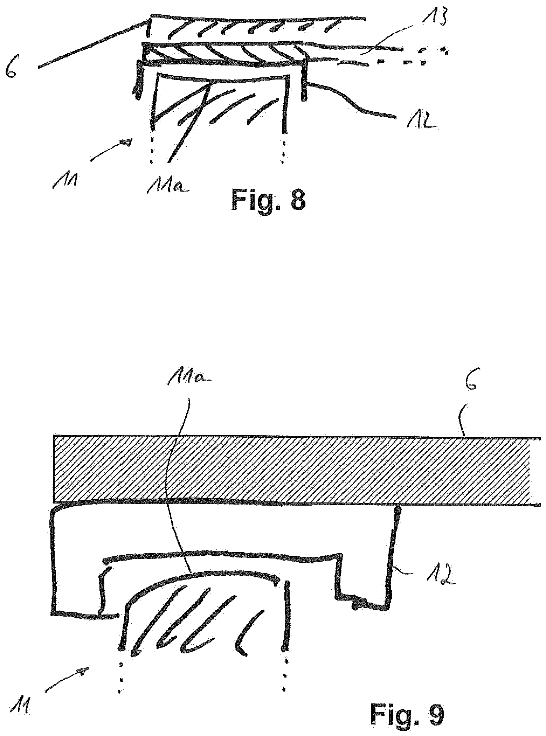

Die Figuren 8 und 9 beschreiben mögliche Ausgestaltungen des zweiten Aspekts der vorliegenden Erfindung. Dabei kann vorgesehen sein, ein erfindungsgemäßes flexibles Leitungselement an seinem einen Ende gemäß den Figuren 1 bis 7 und an seinem anderen Ende gemäß den Figuren 8 oder 9 auszubilden. Die Erfindung ist jedoch nicht hierauf beschränkt; vielmehr kommen auch Ausgestaltungen in Betracht, bei denen das flexible Leitungselement an beiden Enden gemäß den Figuren 1 bis 7 oder an beiden Enden gemäß den Figuren 8 und 9 ausgebildet ist.

In den Figuren 8 und 9 wurde auf eine Darstellung des Balgs oder Wellschlauchs gänzlich verzichtet. Entscheidend ist, dass der Balg oder Wellschlauch, beispielsweise gemäß Figur 2, an wenigstens einem seiner Anschlussenden mit einer relativ massiveren Rohrleitungskomponente verbunden ist, von der in Figur 8 und Figur 9 nur ein radialer Vorsprung 11 gezeigt ist, der in Richtung seiner radialen Erstreckung ein Übermaß oder zumindest ein Gleichmaß bezogen auf den gewellten Abschnitt des Balgs aufweist, vgl. beispielsweise den gewellten Abschnitt 1a in Figur 2. Im Bereich dieses radialen Vorsprungs 11 ist im axialen Schiebesitz ein Ringteil 12 angeordnet, welches in axialer Richtung ein Übermaß gegenüber dem radialen Vorsprung 11 aufweist und deshalb in axialer Richtung beweglich ist. Das Ringteil 12 weist einen im Schnitt insbesondere U-förmigen Querschnitt auf, wie dargestellt. Radial außen an dem Ringteil 12 ist - in Figur 9 direkt und in Figur 8 indirekt eine insbesondere thermisch isolierende Außenkomponente 6 angeordnet, wie weiter oben in Bezug auf Figur 1 bereits detailliert beschrieben. Hierauf kann an dieser Stelle verwiesen werden.

Die Außenkomponente 6 umgibt den (nicht dargestellten) Balg aufgrund der angesprochenen radialen Abmessung des radialen Vorsprungs 11 mit radialem Abstand, so dass es keine mechanische Beeinträchtigung von Balg und/oder Außenkomponente 6 ergibt.

Der angesprochene Schiebesitz sorgt dafür, dass die Beweglichkeit des Balgs nicht wesentlich beeinträchtigt wird.

Gemäß Figur 8 ist zwischen der Außenkomponente 6 und dem Ringteil 12 noch ein weiteres Rohrteil 13 dargestellt, welches als Träger für die Außenkomponente 6 fungiert. Grundsätzlich kann auf die Zwischenschaltung eines solchen Trägers jedoch auch verzichtet werden, wie die Darstellung in Figur 9 zeigt, die bei der Außenkomponente 6 unmittelbar auf dem Ringteil 12 angeordnet ist.

Wie der Figur 9 noch entnommen werden kann, weist der radiale Vorsprung 11 an seiner Außenumfangsfläche 11a eine konvexe Wölbung auf, welche es dem Ringteil 12 ermöglicht, auch eine gewisse Schwenkbewegung um eine Achse senkrecht zur Blattebene auszuführen. Dies kann die Beweglichkeit der Anordnung weiter verbessern. Dagegen ist beim Gegenstand der Figur 8 der radiale Vorsprung 11 an seiner Außenumfangsfläche 11a im Wesentlichen eben ausgebildet, so dass sich ein reiner Schiebesitz ergibt.

### Bezugszeichenliste

- 1: Balg
- 1a: gewellter Abschnitt
- 1b: Anschlussabschnitt
- 2: Gegenstück
- 2': Gegenstück
- 2": Gegenstück
- 3: Distanzhalter
- 3': Glocke
- 3a: Abschnitt
- 3b: Abschnitt
- 4: V-Bord-Schelle
- 5: Schraube
- 6: Außenkomponente
- 7: Rollschweißnaht
- 8: Schweißnaht
- 9: Innenhülse
- 10: Außenhülse
- 11: radialer Vorsprung
- 11a: Außenumfangsfläche
- 12: Ringteil
- 13: Rohrteil
- L: Längsachse

## Patentansprüche

1. Flexibles Leitungselement mit einem Balg (1) oder Wellschlauch, der wenigstens einen gewellten Abschnitt (1a) und einen sich daran anschließenden endständigen Anschlussabschnitt (1b) aufweist,
**dadurch gekennzeichnet,**
**dass** auf wenigstens einer Seite des Balgs (1) oder Wellschlauchs in dem Anschlussabschnitt (1b) ein eigenstabiler Distanzhalter (3, 3') mit dem Balg (1) oder Wellschlauch verbunden ist, welcher Distanzhalter (3, 3') den gewellten Abschnitt (1a) zumindest teilweise übergreift und von diesem radial beabstandet ist, wobei an dem Distanzhalter (3, 3') eine Außenkomponente (6) aus einem thermischen Isoliermaterial zur äußeren thermischen Isolierung des flexiblen Leitungselements angeordnet ist.

2. Flexibles Leitungselement nach Anspruch 1,
**dadurch gekennzeichnet,**
**dass** der Distanzhalter (3, 3') nach Art einer Glocke ausgebildet ist, vorzugsweise aus mehreren Schalen, höchst vorzugsweise zwei Halbschalen, mit wenigstens einem ersten Abschnitt (3b) mit relativ geringerem Durchmesser und mit wenigstens einem zweiten Abschnitt (3a) mit einer relativ größeren Durchmesser, wobei der Distanzhalter (3, 3') mit dem zweiten Abschnitt (3a) den gewellten Abschnitt (1a) übergreift und im Bereich des ersten Abschnitts (3b) mit dem Balg (1) oder Wellschlauch verbunden ist.

3. Flexibles Leitungselement nach Anspruch 1 oder 2,
**dadurch gekennzeichnet,**
**dass** der Distanzhalter (3, 3') nach Art wenigstens einer zusätzlichen Balg- oder Schlauchlage in dem Anschlussabschnitt (1b) ausgebildet ist.

4. Flexibles Leitungselement nach einem der Ansprüche 1 bis 3,
**dadurch gekennzeichnet,**
**dass** der Balg (1) oder Wellschlauch in dem Anschlussabschnitt (1b) einen V-Bord ausbildet und der Distanzhalter (3, 3') in dem ersten Abschnitt (3b) zumindest abschnittweise parallel zu dem Balg (1) oder Wellschlauch verläuft.

5. Flexibles Leitungselement nach einem der Ansprüche 1 bis 4,
**dadurch gekennzeichnet,**
**dass** der Balg (1) oder Wellschlauch und der Distanzhalter (3') in dem Anschlussabschnitt (1b) gemeinsam um einen Winkel, vorzugsweise etwa 90°, radial nach außen umgebördelt sind, höchst vorzugsweise um ein radial außen angeordnetes, relativ massiveres Gegenstück (2').

6. Flexibles Leitungselement nach einem der Ansprüche 1 bis 5,
**dadurch gekennzeichnet,**
**dass** der Balg (1) oder Wellschlauch oder der Distanzhalter (3, 3') kraftschlüssig miteinander verbunden oder verbindbar sind, vorzugsweise mittels einer V-Bordschelle (4) und einem geeigneten Gegenstück (2).

7. Flexibles Leitungselement nach einem der Ansprüche 1 bis 6, insbesondere nach Anspruch 5 oder 6,
**dadurch gekennzeichnet,**
**dass** der Balg (1) oder Wellschlauch und der Distanzhalter (3, 3')zusätzlich stoffschlüssig verbunden sind, vorzugsweise geklebt oder verscheißt, höchst vorzugsweise punktgeschweißt.

8. Flexibles Leitungselement nach Anspruch 7,
**dadurch gekennzeichnet,**
**dass** die stoffschlüssige Verbindung in dem Anschlussabschnitt (1b) vorgesehen ist, vorzugsweise umlaufend, höchst vorzugsweise in Form einer Rollnahtschweißung (7).

9. Flexibles Leitungselement nach einem der Ansprüche 1 bis 8,
**dadurch gekennzeichnet,**
**dass** der Balg (1) oder Wellschlauch und der Distanzhalter (3, 3') in dem Anschlussabschnitt (1b) stoffschlüssig miteinander verbunden sind (8), vorzugsweise endständig, höchst vorzugsweise unter Verwendung wenigstens einer radial innen oder außen liegenden Hülse (9, 10) und/oder eines relativ massiveren Gegenstücks (2").

10. Isoliertes Leitungselement mit einem flexiblen Leitungselement gemäß einem der Ansprüche 1 bis 9 und mit der an dem Distanzhalter angeordneten Außenkomponente (6), welche das flexible Leitungselement, vorzugsweise den Balg (1) oder Wellschlauch, im Wesentlichen umgibt.

11. Isoliertes Leitungselement gemäß Anspruch 10,
**dadurch gekennzeichnet,**
**dass** die Außenkomponente (6) an ihrem einen Ende an dem Distanzhalter (3, 3') fixiert ist, während sie an ihrem anderen Ende zumindest in Axialrichtung im Wesentlichen frei beweglich bezüglich des flexiblen Leitungselements angeordnet ist, vorzugsweise im Schiebesitz.

12. Isoliertes Leitungselement nach Anspruch 10 oder 11,
**dadurch gekennzeichnet,**
**dass** die Außenkomponente (6) als eigenstabile, thermisch wirksame Isolierung ausgebildet ist, vorzugsweise in Form von mehreren Schalen, höchst vorzugsweise zwei Halbschalen.

13. Flexibles Leitungselement mit einem Balg (1) oder Wellschlauch, der wenigstens einen gewellten Abschnitt (1a) und einen sich daran anschließenden endständigen Anschlussabschnitt (1b) aufweist,
**dadurch gekennzeichnet,**
**dass** auf wenigstens einer Seite des Balgs (1) oder Wellschlauchs in dem Anschlussabschnitt (1b) eine, bezogen auf den Anschlussabschnitt (1b), relativ massivere Rohrleitungskomponente mit dem Balg (1) oder Wellschlauch verbunden ist, vorzugsweise stoffschlüssig und/oder kraftschlüssig, welche Rohrleitungskomponente einen radialen Vorsprung (11) aufweist, vorzugsweise umlaufend, welcher radiale Vorsprung (11) ein Übermaß oder wenigstens ein Gleichmaß in radialer Richtung bezogen auf den gewellten Abschnitt (1a) aufweist, wobei außen auf dem radialen Vorsprung (11) im axialen Schiebesitz ein im Längsschnitt etwa U-förmiges Ringteil (12) angeordnet ist, wobei an dem Ringteil (12) eine Außenkomponente (6) aus einem thermischen Isoliermaterial zur äußeren thermischen Isolierung des flexiblen Leitungselements angeordnet ist, wobei vorzugsweise der radiale Vorsprung (11) an seiner Außenumfangsfläche (11a) gewölbt ausgebildet ist.

14. Flexibles Leitungselement nach Anspruch 13,
**dadurch gekennzeichnet,**
**dass** das Ringteil (12) direkt oder indirekt als Träger für die thermisch isolierende Außenkomponente (6) fungiert, welche Außenkomponente (6) vorzugsweise eigenstabil ausgebildet und höchst vorzugsweise radial außen an dem Ringteil (12) angeordnet ist.

15. Flexibles Leitungselement nach einem der Ansprüche 1 bis 12 und nach Anspruch 13 oder 14,
**dadurch gekennzeichnet,**
**dass** das flexible Leitungselement an seinem einen Ende gemäß einem der Ansprüche 1 bis 12 und an seinem anderen Ende gemäß Anspruch 13 oder 14 ausgebildet ist.

16. Isoliertes Leitungselement mit einem flexiblen Leitungselement gemäß einem der Ansprüche 13 bis 15 mit einer an dem Ringteil (12) sowie gegebenenfalls an dem Distanzhalter angeordneten insbesondere thermisch isolierenden Außenkomponente (6), die das flexible Leitungselement, vorzugsweise den Balg (1) oder Wellschlauch, im Wesentlichen umgibt, wobei die Außenkomponente (6) als thermisch wirksame, beispielweise eigenstabile, Isolierung ausgebildet ist, vorzugsweise in Form mehrerer Schalen, höchst vorzugsweise zweier Halbschalen.

## Claims

1. Flexible duct element having a bellows (1) or corrugated hose which has at least one corrugated portion (1a) and an adjoining terminal connection portion (1b),
**characterised in that**
on at least one side of the bellows (1) or corrugated hose, in the connection portion (1b), an inherently stable spacer (3, 3') is joined to the bellows (1) or corrugated hose, which spacer (3, 3') engages at least partly over the corrugated portion (1a) and is spaced apart radially therefrom, wherein on the spacer (3, 3') there is arranged an external component (6) made of a thermal insulating material for external thermal insulation of the flexible duct element.

2. Flexible duct element according to claim 1,
**characterised in that**
the spacer (3, 3') is of bell-like construction, preferably being composed of a plurality of shells, most preferably two half-shells, with at least one first portion (3b) of relatively smaller diameter and with at least one second portion (3a) of relatively larger diameter, the spacer (3, 3') engaging over the corrugated portion (1a) with its second portion (3a) and being joined to the bellows (1) or corrugated hose in the region of the first portion (3b).

3. Flexible duct element according to claim 1 or 2,
**characterised in that**
the spacer (3, 3') is in the form of at least one additional bellows-like or hose-like layer in the connection portion (1b).

4. Flexible duct element according to any one of claims 1 to 3,
**characterised in that**
the bellows (1) or corrugated hose forms a V-cuff in the connection portion (1b), and the spacer (3, 3'), at least in some regions, runs parallel to the bellows (1) or corrugated hose in the first portion (3b).

5. Flexible duct element according to any one of claims 1 to 4,
**characterised in that**
the bellows (1) or corrugated hose and the spacer (3') are jointly bent over at an angle, preferably at about 90°, in the connection portion (1b) so as to point radially outwards, most preferably around a radially externally arranged, relatively more solid counterpart (2').

6. Flexible duct element according to any one of claims 1 to 5,
**characterised in that**
the bellows (1) or corrugated hose or the spacer (3, 3') are connected or connectible to one another by force-based engagement, preferably by means of a V-cuff clamp (4) and a suitable counterpart (2).

7. Flexible duct element according to any one of claims 1 to 6, especially according to claim 5 or 6,
**characterised in that**
the bellows (1) or corrugated hose and the spacer (3, 3') are additionally joined by a bonded connection, preferably by adhesive bonding or welding, most preferably by spot welding.

8. Flexible duct element according to claim 7,
**characterised in that**
the bonded connection is provided in the connection portion (1b), preferably around the periphery, most preferably in the form of a roller seam weld (7).

9. Flexible duct element according to any one of claims 1 to 8,
**characterised in that**
the bellows (1) or corrugated hose and the spacer (3, 3') are joined to one another (8) by a bonded connection in the connection portion (1b), preferably terminally, most preferably using at least one radially internally or externally located sleeve (9, 10) and/or a relatively more solid counterpart (2").

10. Insulated duct element having a flexible duct element in accordance with any one of claims 1 to 9 and having the external component (6) arranged on the spacer, which external component substantially surrounds the flexible duct element, preferably the bellows (1) or corrugated hose.

11. Insulated duct element according to claim 10,
**characterised in that**
the external component (6) is fixed at one end to the spacer (3, 3'), while at its other end it is arranged so as to be substantially freely movable, at least in the axial direction, with respect to the flexible duct element, preferably with a sliding fit.

12. Insulated duct element according to claim 10 or 11,
**characterised in that**
the external component (6) is in the form of inherently stable, thermally effective insulation, preferably in the form of a plurality of shells, most preferably two half-shells.

13. Flexible duct element having a bellows (1) or corrugated hose which has at least one corrugated portion (1a) and an adjoining terminal connection portion (1b),
**characterised in that**
on at least one side of the bellows (1) or corrugated hose, in the connection portion (1b), a pipe component which is relatively more solid in relation to the connection portion (1b) is joined to the bellows (1) or corrugated hose, preferably by a bonded connection and/or by force-based engagement, which pipe component has a radial projection (11), preferably around the periphery, which radial projection (11) is dimensioned so as to be larger than or at least the same size as the corrugated portion (1a) in the radial direction, wherein an annular part (12), which is approximately U-shaped in longitudinal section, is arranged externally on the radial projection (11) with an axial sliding fit, there being arranged on the annular part (12) an external component (6) made of a thermal insulating material for external thermal insulation of the flexible duct element, the radial projection (11) preferably having a convex shape on its external circumferential surface (11a).

14. Flexible duct element according to claim 13,
**characterised in that**
the annular part (12) acts directly or indirectly as support for the thermally insulating external component (6), which external component (6) is preferably of inherently stable construction and is most preferably arranged radially externally on the annular part (12).

15. Flexible duct element according to any one of claims 1 to 12 and according to claim 13 or 14,
**characterised in that**
the flexible duct element is at one end formed in accordance with any one of claims 1 to 12 and at its other end in accordance with claim 13 or 14.

16. Insulated duct element having a flexible duct element according to any one of claims 13 to 15, having an external component (6), especially a thermally insulating external component, which is arranged on the annular part (12) and optionally on the spacer, which external component substantially surrounds the flexible duct element, preferably the bellows (1) or corrugated hose, the external component (6) being in the form of thermally effective, for example inherently stable, insulation, preferably in the form of a plurality of shells, most preferably two half-shells.

## Revendications

1. Élément de conduite flexible comportant un soufflet (1) ou un tuyau ondulé qui présente au moins une partie ondulée (1a) et une partie de raccordement terminale (1b) s'y raccordant,
**caractérisé en ce que**, sur au moins un côté du soufflet (1) ou du tuyau ondulé, un élément écarteur autostable (3, 3') est relié au soufflet (1) ou au tuyau ondulé dans la partie de raccordement (1b), lequel élément écarteur (3, 3') s'étend au moins partiellement sur la partie ondulée (1a) et est espacé radialement de celle-ci, un composant extérieur (6) en matériau thermiquement isolant pour l'isolation thermique extérieure de l'élément de conduite flexible étant disposé sur l'élément écarteur (3, 3').

2. Élément de conduite flexible selon la revendication 1,
**caractérisé en ce**
**que** l'élément écarteur (3, 3') est réalisé à la manière d'une cloche, de préférence à partir de plusieurs coques, particulièrement de préférence de deux demi-coques, avec au moins une première partie (3b) d'un diamètre relativement plus faible et au moins une deuxième partie (3a) d'un diamètre relativement plus grand, l'élément écarteur (3, 3') s'étendant avec la deuxième partie (3a) sur la partie ondulée (1a) et étant relié au soufflet (1) ou au tuyau ondulé dans la zone de la première partie (3b).

3. Élément de conduite flexible selon la revendication 1 ou la revendication 2,
**caractérisé en ce**
**que** l'élément écarteur (3, 3') est réalisé à la manière d'au moins une couche de soufflet ou de tuyau supplémentaire dans la partie de raccordement (1b).

4. Élément de conduite flexible selon l'une des revendications 1 à 3,
**caractérisé en ce**
**que** le soufflet (1) ou le tuyau ondulé forme un rebord en V dans la partie de raccordement (1b) et l'élément écarteur (3, 3') dans la première partie (3b) est parallèle au soufflet (1) ou au tuyau ondulé au moins sur certaines parties.

5. Élément de conduite flexible selon l'une des revendications 1 à 4,
**caractérisé en ce**
**que** le soufflet (1) ou le tuyau ondulé et l'élément écarteur (3') dans la partie de raccordement (1b) sont rabattus ensemble radialement vers l'extérieur d'un angle, de préférence d'environ 90°, particulièrement de préférence autour d'une contre-pièce (2') relativement plus massive disposée radialement vers l'extérieur.

6. Élément de conduite flexible selon l'une des revendications 1 à 5,
**caractérisé en ce**
**que** le soufflet (1) ou le tuyau ondulé ou l'élément écarteur (3, 3') sont reliés ou peuvent être reliés entre eux à force, de préférence au moyen d'une bride en V (4) et d'une contre-pièce (2) adaptée.

7. Élément de conduite flexible selon l'une des revendications 1 à 6, en particulier selon la revendication 5 ou la revendication 6,
**caractérisé en ce**
**que** le soufflet (1) ou le tuyau ondulé et l'élément écarteur (3, 3') sont en outre reliés par liaison de matière, de préférence collés ou soudés, particulièrement de préférence soudés par points.

8. Élément de conduite flexible selon la revendication 7,
**caractérisé en ce**
**que** la liaison de matière est prévue dans la partie de raccordement (1b), de préférence circonférentiellement, de préférence sous la forme d'une soudure à la molette (7).

9. Élément de conduite flexible selon l'une des revendications 1 à 8,
**caractérisé en ce que** le soufflet (1) ou le tuyau ondulé et l'élément écarteur (3, 3') sont reliés entre eux par liaison de matière (8) dans la partie de raccordement (1b), de préférence à l'extrémité, particulièrement de préférence en utilisant au moins un manchon (9, 10) situé radialement vers l'intérieur ou vers l'extérieur et/ou une contre-pièce (2") relativement plus massive.

10. Élément de conduite isolé avec un élément de conduite flexible selon l'une des revendications 1 à 9 et avec le composant extérieur (6) disposé sur l'élément écarteur, qui entoure sensiblement l'élément de conduite flexible, de préférence le soufflet (1) ou le tuyau ondulé.

11. Élément de conduite isolé selon la revendication 10,
**caractérisé en ce**
**que** le composant extérieur (6) est fixé à une de ses extrémités à l'élément écarteur (3, 3') tandis qu'à son autre extrémité il est disposé, au moins dans la direction axiale, sensiblement de manière librement mobile par rapport à l'élément de conduite flexible, de préférence en ajustement coulissant.

12. Élément de conduite isolé selon la revendication 10 ou la revendication 11,
**caractérisé en ce**
**que** le composant extérieur (6) est réalisé sous la forme d'une isolation autostable, thermiquement efficace, de préférence sous la forme de plusieurs coques, particulièrement de préférence de deux demi-coques.

13. Élément de conduite flexible comportant un soufflet (1) ou un tuyau ondulé qui présente au moins une partie ondulée (1a) et une partie de raccordement terminale (1b) s'y raccordant,
**caractérisé en ce**
**que**, sur au moins un côté du soufflet (1) ou du tuyau ondulé, dans la partie de raccordement (1b), un composant de tuyauterie relativement plus massif, par rapport à la partie de raccordement (1b), est relié au soufflet (1) ou au tuyau ondulé, de préférence par liaison de matière et/ou à force, lequel composant de tuyauterie présente une saillie radiale (11), de préférence circonférentielle, laquelle saillie radiale (11) présente une surcote ou au moins une égalité de cote dans la direction radiale par rapport à la partie ondulée (la), un élément annulaire (12) approximativement en forme de U en coupe longitudinale étant disposé extérieurement sur la saillie radiale (11) dans l'ajustement coulissant axial, un composant extérieur (6) en matériau thermiquement isolant pour l'isolation thermique extérieure de l'élément de conduite flexible étant disposé sur l'élément annulaire (12), la saillie radiale (11) étant de préférence incurvée sur sa surface circonférentielle extérieure (11a).

14. Élément de conduite flexible selon la revendication 13,
**caractérisé en ce**
**que** l'élément annulaire (12) sert directement ou indirectement de support pour le composant extérieur (6) thermiquement isolant, lequel composant extérieur (6) est de préférence autostable et particulièrement de préférence disposé radialement vers l'extérieur sur l'élément annulaire (12).

15. Élément de conduite flexible selon l'une des revendications 1 à 12 et selon la revendication 13 ou la revendication 14,
**caractérisé en ce**
**que** l'élément de conduite flexible est formé à une de ses extrémités selon l'une des revendications 1 à 12 et à son autre extrémité selon la revendication 13 ou la revendication 14.

16. Élément de conduite isolé avec un élément de conduite flexible selon l'une des revendications 13 à 15 et avec un composant extérieur (6), en particulier thermiquement isolant, qui est disposé sur l'élément annulaire (12) et éventuellement sur l'élément écarteur et entoure sensiblement l'élément de conduite flexible, de préférence le soufflet (1) ou le tuyau ondulé, le composant extérieur (6) étant réalisé sous la forme d'une isolation thermiquement efficace, par exemple autostable, de préférence sous la forme de plusieurs coques, particulièrement de préférence de deux demi-coques.
